# EUROPEAN PATENT APPLICATION

(11) **EP 1 917 890 A1**
(43) Date of publication of application: **07.05.2008**
(21) Application number: 06256376.2
(22) Date of filing: 14.12.2006
(51) Int. Cl.: A47J 36/02

(54) **Foldable ovenware container and method of production**

(30) Priority: 31.10.2006 US 590574
(71) Applicant: Fung, Duncan C., Richmond, Virginia 23230 (US)
(72) Inventor: Fung, Duncan C., Richmond, Virginia 23230 (US)
(74) Representative: Wombwell, Francis

(57) **Abstract**

A foldable or collapsible ovenware container (40) that maintains a rigid shape while in use and can be folded into a smaller size for storage. The ovenware container includes rigid top (26) and bottom (22) portions separated by a flexible middle portion (24). The flexible middle portion (24) includes thick (30) and thin (28) wall sections. Pressure applied to the top portion (26) causes the flexible middle portion (24) to collapse in an orderly manner toward the bottom portion (22), with the middle portion (24) folding at each of the thin wall sections (28) to create a plurality of folds or pleats in the middle portion (24) in the collapsed configuration.

## Description

### Field of the Invention

The present invention relates to ovenware containers and particularly to an ovenware container that includes an elastomeric portion that enables the container to be folded or collapsed when not in use to enable easy and more efficient storage.

### Background of the Invention

Conventional ovenware containers are usually of rigid structure and are typically constructed of metal, ceramics, or glass such as Pyrex®. Most kitchens, commercial and residential, typically stock a large range of types and sizes of ovenware containers in order to be prepared for the myriad cooking tasks that are encountered.

Conventional ovenware containers, as a result of their rigid construction, typically occupy a significant amount of space in the kitchen. All kitchens, especially residential kitchens that are typically limited in space, would benefit from ovenware containers that occupy less space when not in use.

Recently, non-rigid or soft ovenware containers have been introduced. The prior art soft ovenware containers are typically constructed of soft silicone rubber and are so soft, typically having a Shore A hardness of approximately 40, that they can be flexed or bent out of shape. Although soft ovenware containers can be flexed or bent into a smaller size to conserve space, they have the disadvantage that they must be supported by a rigid pan or similar obj ect for stability when lifted or transported from one area to another. Soft silicone is not practical for large ovenware containers having deep sides or including a large volume as the soft sides lack rigidity and, when filled with a liquid or semi-liquid food such as cake batter, can buckle or have the sides deflect and cause spillage of the contents.

What is needed therefore is ovenware container that maintains a rigid shape when in use, without the use of a supporting pan, and can be folded to a smaller size to conserve space during storage.

### Summary of the Invention

According to the present invention, there is provided a collapsible ovenware container which maintains a rigid shape while in use and which can be folded into a smaller size for storage. The ovenware container includes rigid top and bottom portions separated by a flexible middle portion. The flexible middle portion includes thick and thin wall sections. Pressure applied to the top portion causes the flexible middle portion to collapse in an orderly manner toward the bottom portion, with the middle portion folding at each of the thin wall sections to create a plurality of folds or pleats in the middle portion in the collapsed configuration.

### Objects and Advantages

Several advantages are achieved with the ovenware container of the present invention, including:
(1) The foldable ovenware container of the present invention has the advantage that it can be folded into a compact shape for storage. This greatly reduces the need for storage space for the ovenware container when it is not in use.
(2) The foldable ovenware container of the present invention maintains its shape when placed in its unfolded state. This is a big advantage over prior art soft ovenware containers.
(3) In its unfolded state, the ovenware container of the present invention is capable of supporting unstable foods such as liquids or batters without collapse caused by errant bumping or jostling by a handler.
(4) Unlike soft ovenware containers, the foldable ovenware container of the present invention does not need to be supported by a separate pan or other rigid object when being moved from one location to another.
(5) The foldable ovenware container of the present invention can be used in high temperature environments such as conventional ovens.
(6) An ovenware container constructed entirely of silicone rubber according to the present invention can be used in microwave ovens.

These and other objects and advantages of the present invention will be better understood by reading the following description along with reference to the drawings.

### Description of the Drawings

Fig. 1 is a side view of an ovenware container according to the present invention.

Fig. 2 is a sectional view of the ovenware container taken along line 2-2 of Fig. 1.

Fig. 3 is a side view of the ovenware container of Fig. 1 in a collapsed or folded state.

Fig. 4 is a sectional view of the ovenware container taken along line 4-4 of Fig. 3.

Fig. 5 is a sectional view of a second embodiment of the ovenware container of the present invention.

Fig. 6 is a sectional view of a third embodiment of the ovenware container of the present invention.

Fig. 7 is a sectional view of a fourth embodiment of the ovenware container of the present invention.

Fig. 8 is a bottom view of the ovenware container depicted in Fig. 1.

### Table of Nomenclature

The following is a listing of part numbers used in the drawings along with a brief description:

| Part Number | Description |
|---|---|
| 20 | ovenware container |
| 22 | bottom portion |
| 24 | middle portion |
| 26 | top portion |
| 28 | thin wall section |
| 30 | thick wall section |
| 32 | top edge |
| 34 | bottom edge |
| 36 | handle |
| 37 | bottom of container |
| 38 | extension |
| 39 | pleat or fold |
| 40 | ovenware container, second embodiment |
| 50 | ovenware container, third embodiment |
| 60 | ovenware container, fourth embodiment |

### Detailed Description

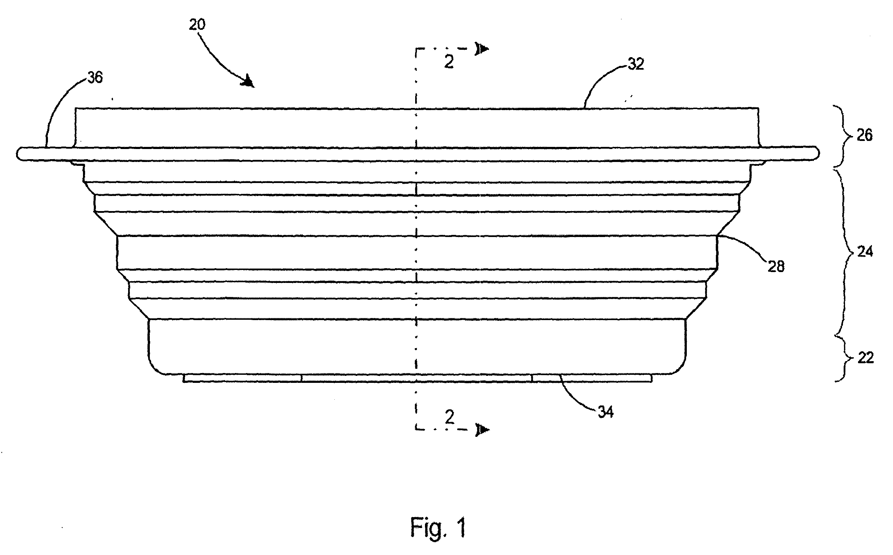

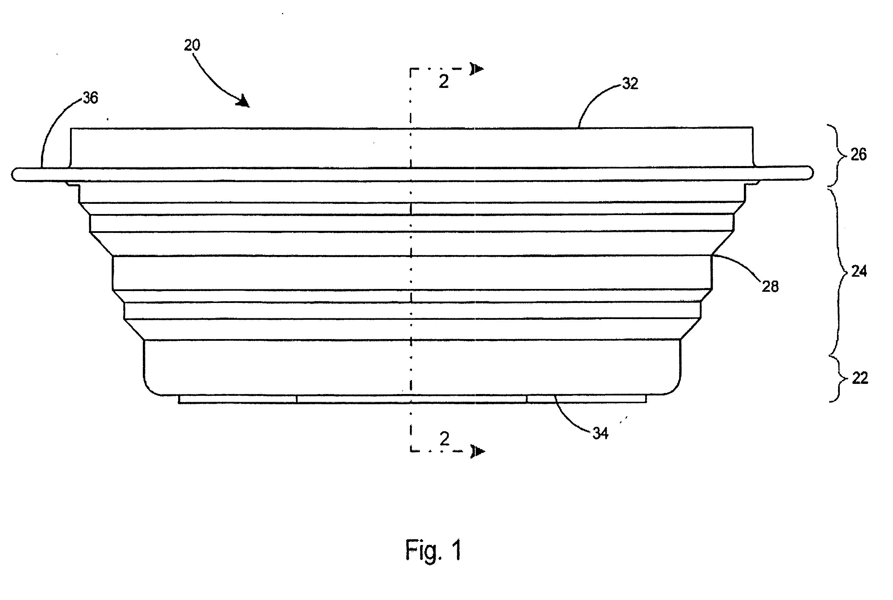

With reference to a first and preferred embodiment in Fig. 1, the present invention is an ovenware container 20 and a method of producing the ovenware container. The ovenware container includes a bottom portion 22, a middle portion 24 extending from the bottom portion 22, and a top portion 26 extending from the middle portion 24.

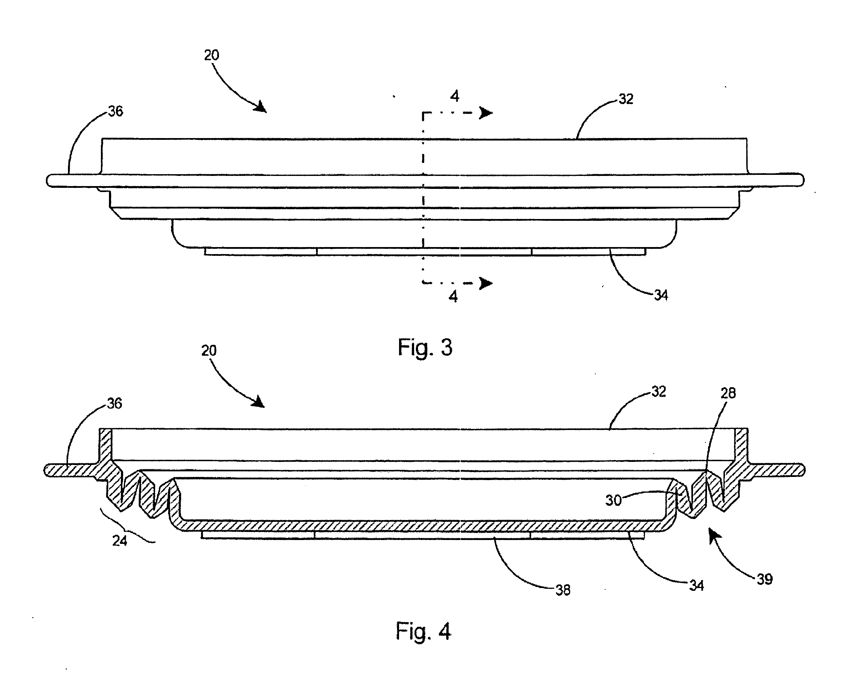

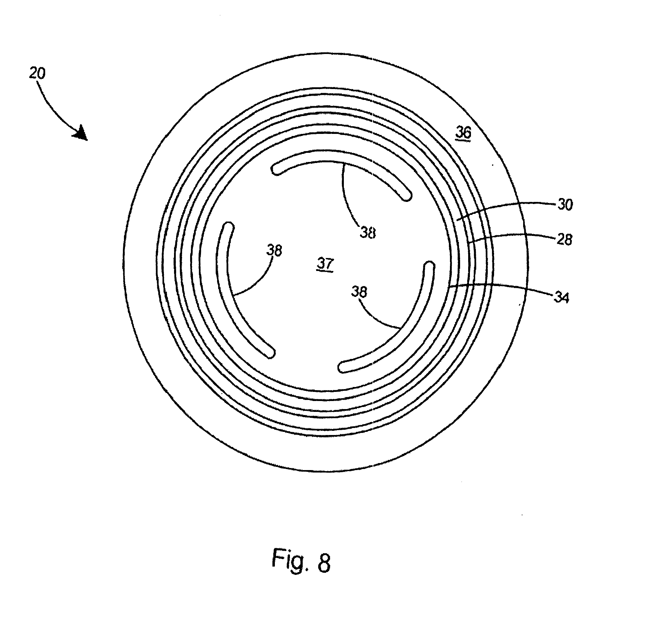

Referring to the cross-sectional view in Fig. 2, the middle portion 24 of the ovenware container 20 includes one or more thin wall sections 28 separated by thick wall sections 30. The thin wall sections 28 are planar and arranged parallel with the bottom edge 34 of the container 20. The thin wall sections 28 render the container foldable, with the container 20 capable of folding at each of the thin wall sections 28. The container 20 further includes a top edge 32, a bottom edge 34, and a handle 36 extending from the top portion 26. The container 20 can further include extensions 38 extending from the bottom edge 34. As shown in Fig. 8, the extensions 38 extend from the bottom 37 of the ovenware container 20 and provide a set-off for elevating the bottom 37 of the container away from any surface it is placed upon. The extensions 38, being out of direct contact with the bottom 37 of the container 40, provide a cooler lower contact surface when placing the container on a surface.

As shown in Figs. 3 and 4, in which the ovenware container 20 is shown in a folded configuration, the vertical profile of the container 20 can be reduced dramatically for storage purposes, allowing several ovenware containers to be stacked on top of one another (not shown) and thereby reducing the amount of space required for storage. As shown in Fig. 4, the container 20 has folded at each of the thin wall sections 28. As pressure is applied to the top edge 32 of the container 20 the container folds in sequence at each of the thin wall sections 28 until it is folded at all of the thin wall sections 28. In the folded configuration, the thin wall sections 28 and thick wall sections 30 form pleats 39 or folds in the flexible middle portion 24 of the ovenware container 20.

With reference to Fig. 1, in addition to the thin wall sections 28, to enable the folding ability and the self supporting characteristics of the ovenware container 20 the container includes a middle portion 24 that is flexible and slightly softer than the bottom portion 22 or top portion 26. Preferably the middle portion 24 is constructed with a hardness of between 70 and 85 Shore A hardness and the bottom portion 22 and top portion 26 are constructed with a hardness of greater than 85 Shore A. The middle portion 24 is constructed of a flexible, resilient material, such as silicone rubber, and therefore the container can withstand many repeated folding cycles without any cracking at the thin wall sections 28. Having the top 26 and bottom 22 portions harder than 85 Shore A enables the top portion 26, when pressed on the top edge 32, to maintain its rigidity and thereby allows the middle portion 24 to fold evenly and in a controlled fashion toward the bottom portion 22. The hard top 26 and bottom 22 portions further promote easier handling of the foldable ovenware container 20, as the top 26 and bottom 22 do not buckle or flex when grasped. This is a significant advantage over prior art soft ovenware containers, which typically have thin walls and a hardness rating in the range of 40 Shore A, making them very susceptible to buckling and leading to spillage of the contents of the prior art soft ovenware containers. Furthermore, the hard top 26 and bottom 22 portions enable the ovenware container of the present invention to be a stand-alone container. The ovenware container 20 of the present invention is therefore capable of accepting and being carried with any kind of food, including liquids such as soups, without being supported by an external pan or other support. Prior art soft ovenware containers, in contrast, must be supported by a pan or other support device in order to lessen the chance of spillage caused by buckling of the sides, which is very possible with ovenware containers having a hardness rating of about 40 Shore A. The ovenware container 20 of Fig. 1, being constructed entirely of silicon rubber, can be used in both conventional and microwave ovens as microwave radiation is not absorbed by the silicon rubber.

In the preferred embodiment shown in Fig. 1, the ovenware container 20 is preferably constructed of an elastomeric polymer such as food grade silicone rubber. The top portion 26 and bottom portion 22 are preferably each formed in a separate mold by compression molding. The molds are each filled with an uncured silicone rubber composition and are cured to obtain a Shore A hardness of greater than 85 in the resultant cured top 26 and bottom 22 portions. The top 26 and bottom 22 portions are then placed in a third mold for forming the final ovenware container 20. The bottom portion 22 is placed in the bottom of the mold, an uncured silicone rubber composition is inserted on top of the bottom portion 22, and the top portion 26 is placed in the top of the mold. The uncured silicone rubber composition introduced to the third mold contains a measured quantity of hardness agent to obtain a Shore A hardness of between 70 and 85 in what will become the middle portion 24 of the ovenware container. The mold includes sufficient uncured silicone rubber to ensure intimate contact of the uncured silicone rubber with the entire periphery of both the bottom 22 and top 26 portions. The curing cycle preferably includes between 5 and 13 minutes of curing time at between 120 and 180 kg force per cm² and at a cure temperature of between 140 and 200 degrees Celsius. The parameters of the curing cycle are varied according to the size of container, the grade of uncured silicone rubber introduced to the mold, the thickness of the container, the amounts and types of additives within the uncured silicone rubber composition, and various other factors. After the curing cycle, the ovenware container includes a bottom portion 22 of cured silicone rubber having a Shore A hardness of greater than 85, a middle portion 24 of cured silicone rubber having a Shore A hardness of between 70 and 85, and a top portion 26 having a Shore A hardness of greater than 85. After being cured, the top 26 and bottom 22 portions of the ovenware container 20 are securely bonded to the middle portion to form the integral ovenware container 20 and the ovenware container is oven safe to 530 degrees F.

The top 26 and bottom 22 portions of the ovenware container 20 shown in Fig. 1 can also be formed from a ceramic and silicone rubber mixture. Ceramic powders can be mixed with the uncured silicone rubber to further raise the hardness of the top 26 and bottom 22 portions. Aluminum oxide is one example of a ceramic powder that can be added to the uncured silicone rubber to increase the Shore A hardness rating of the cured silicone rubber and ceramic mixture.

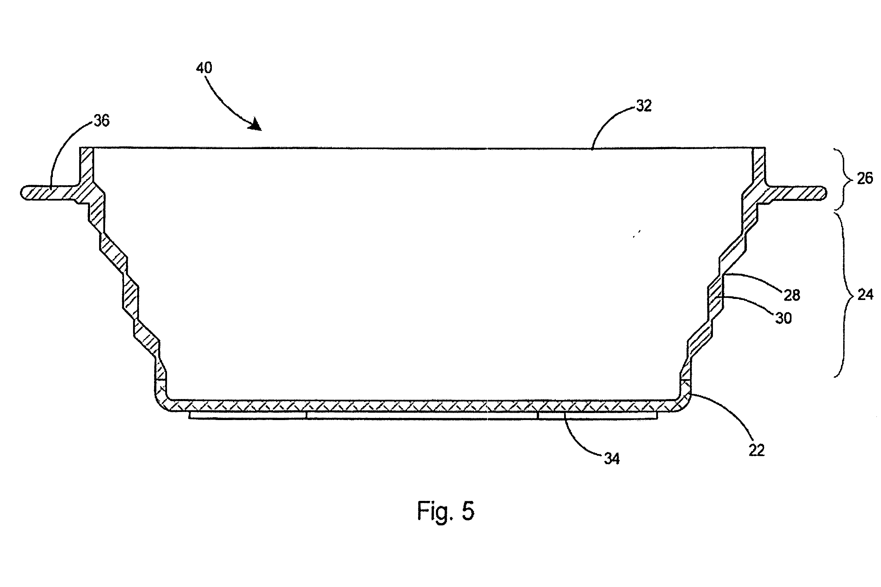

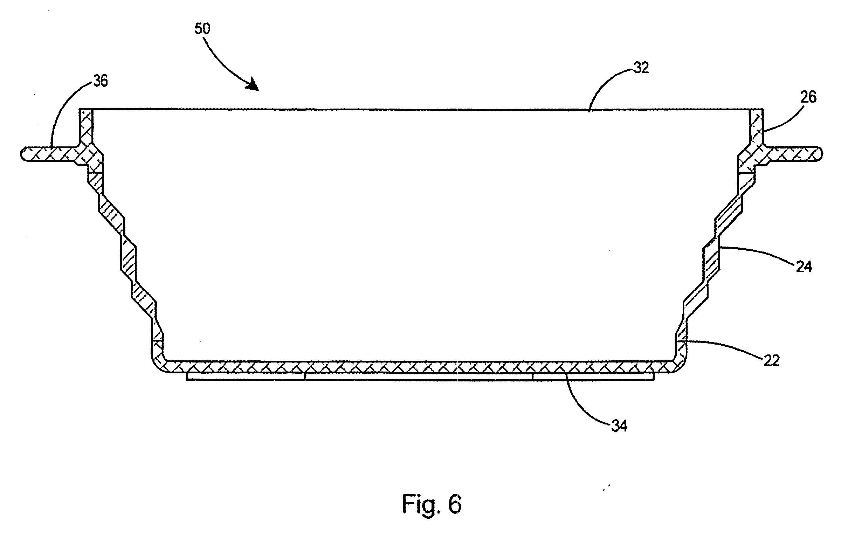

A second embodiment of the ovenware container 40, shown in Fig. 5, includes a bottom portion 22 that is constructed of aluminum. A third embodiment of the ovenware container 50, shown in Fig. 6, has both the bottom portion 22 and top portion 26 constructed of aluminum. As these two embodiments illustrate, the top 26 and bottom 22 portions of the ovenware container can be constructed of other appropriate materials that include the desired Shore hardness of greater than 85. The top portion 26 and the bottom portion 22 therefore can be constructed of metal. Preferably the bottom portion 22 is a metal with a high heat transfer coefficient. A list of preferred metals for the bottom 22 and top portions includes copper, aluminum, and steel. Alternatively, the top 26 and bottom portions can be constructed of ceramic, tempered glass, or borosilicate glass. All of these materials can be bonded securely to the silicone rubber middle portion 24 with an appropriate cycle time, temperature, and pressure in the compression molding procedure described above. The top 26 and bottom 22 portions, whether constructed of metal, ceramic, or glass, are introduced to the mold as described above and uncured silicone rubber composition is introduced to form the middle portion. After the pressure, temperature, and time of the curing cycle are applied in the compression molding operation, the cured silicone rubber middle portion 24 is integrally bonded with the separate top 26 and bottom 22 portions.

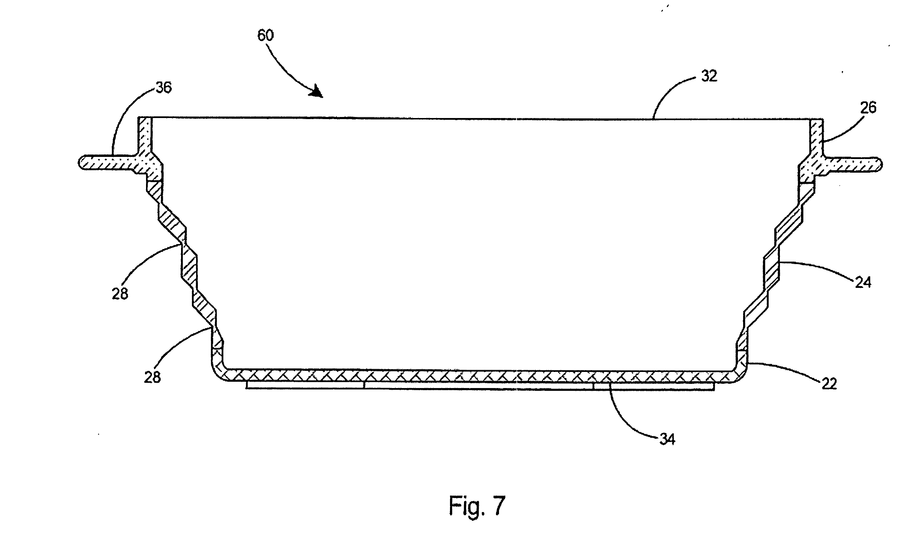

With reference to Fig. 7, a fourth embodiment of the ovenware container 60 is shown in which the top 26 and bottom 22 portions are constructed of different products to provide different desired properties at the top versus the bottom of the ovenware container. The top portion 26 is constructed of tempered or borosilicate glass, which has good insulating properties. After it has been removed from the oven, a user can grasp the top portion 26 of the ovenware container 60 with less risk of heat transfer to their fingers. The bottom portion 22 of the ovenware container 60 is constructed of aluminum, which promotes good heat transfer from the oven or stovetop to the contents of the container during cooking.

Another possible construction for the container of the present invention would include a top and bottom portion constructed of ceramic or tempered or borosilicate glass and a middle portion constructed of silicon rubber. Ovenware containers constructed in this manner would be appropriate for use in both conventional ovens and microwave ovens.

The present invention includes a method of forming a container including bonding together in a molding operation, including compression molding or injection molding, a bottom, middle, and top portion. The bottom portion and top portion are each constructed of cured silicone rubber, metal, ceramic, tempered glass, or borosilicate glass. A mold is provided having a cavity for accepting the bottom portion, the top portion, and an uncured silicone rubber composition between the bottom and top portions. The method includes loading the mold with the bottom container portion, the uncured silicone rubber composition, and the top container portion. The uncured rubber composition within the mold is in intimate contact with the bottom container portion and with the top container portion. Heat and pressure are applied to the mold for a length of time to cure the uncured silicone rubber composition and form a container that includes a cured middle container portion bonded to the top and bottom container portions. The container is then removed from the mold and the resultant product includes a container in which the top and bottom container portions are integrally bonded to the middle container portion.

As should be obvious to a person skilled in the art, several variations can be made in the ovenware container without departing from the scope of the invention. It would be within the scope, for example, to construct the ovenware container of the present invention without a handle rather than with a handle as was shown in the several embodiments shown herein. It would also be within the scope of the present invention to construct ovenware containers according to the present invention with different container widths, heights, and shapes. Depending on the grades of uncured silicone rubber, and the additives to the silicone rubber composition, it would be within the scope of the present invention to vary the level of heat, the pressure, and the cycle time of the curing cycle during the compression molding procedure. It would also be within the scope of the present invention to construct the ovenware container in an injection molding procedure.

As the invention has been described, it will be apparent to those skilled in the art that the same may be varied in many ways without departing from the spirit and scope of the invention. Any and all such modifications are intended to be included within the scope of the appended claims.

## Claims

1. A container comprising:
a bottom portion;
a middle portion extending from said bottom portion;
a top portion extending from said middle portion;
said bottom portion and said top portions having a first hardness;
said middle portion having a hardness lower than said first hardness of said bottom portion and said top portion; and
thin wall sections in said middle portion.

2. The container of claim 1 wherein
said first hardness of said bottom portion and said top portion is greater than 85 Shore A hardness; and
said hardness of said middle portion is between 70 and 85 Shore A hardness.

3. The container of claim 1 wherein said middle portion is constructed of an elastomeric polymer.

4. The container of claim 3 wherein said elastomeric polymer is silicone rubber.

5. The container of claim 1 wherein said top portion and said bottom portion are constructed of an elastomeric polymer.

6. The container of claim 5 wherein said elastomeric polymer is silicone rubber.

7. The container of claim 1 wherein said top portion and said bottom portion are constructed of metal.

8. The container of claim 7 wherein said metal is selected from the group consisting of copper, aluminum, and steel.

9. The container of claim 1 wherein said top portion and said bottom portion are constructed of ceramic.

10. The container of claim 1 wherein said top portion and said bottom portion are constructed of glass.

11. The container of claim 10 wherein said glass is selected from the group consisting of tempered glass and borosilicate glass.

12. The container of claim 1 wherein said top portion and said bottom portion are constructed of a mixture of silicone rubber and ceramic powder.

13. A method of forming a container including the steps of:
providing a bottom container portion constructed of cured silicone rubber, metal, ceramic, or borosilicate glass;
providing a top container portion constructed of cured silicone rubber, metal, ceramic, or borosilicate glass;
providing an uncured silicone rubber composition;
providing a mold having a cavity for accepting said bottom container portion, said uncured silicone rubber composition, and said top container portion;
placing in order in said mold said bottom container portion, said uncured silicone rubber composition, and said top container portion, said uncured rubber composition being in contact with said bottom container portion and with said top container portion;
curing said uncured silicone rubber in said mold in a curing cycle having a curing temperature, a curing pressure, and a curing cycle time to cure said uncured silicone rubber composition and form said container including a cured middle container portion bonded to said top and bottom container portions; and
removing said container from said mold, said container including said top and bottom container portions integrally bonded to said middle container portion.

14. The method of claim 13 wherein said cured silicone rubber of said top container portion and said bottom container portion includes a Shore A hardness of greater than 85.

15. The method of claim 13 wherein said curing cycle includes
a curing temperature of between 140 and 200 degrees Celsius;
a curing pressure of between 120 and 180 kg force per cm²; and
and a curing cycle time of between 5 and 13 minutes.
